Europäisches Patentamt

European Patent Office

Office européen des brevets

(19)

(11) Veröffentlichungsnummer: **0 000 692**
**B1**

(12) **EUROPÄISCHE PATENTSCHRIFT**

(21) Anmeldenummer: **78100160.7**

(22) Anmeldetag: **15.06.78**

(51) Int. Cl.³: **B 65 D 88/54,**
**G 05 D 7/01**

(54) Behälter mit einer Vorrichtung zum Abzug von Flüssigkeit

(30) Priorität: **13.08.77 DE 7725257**

(43) Veröffentlichungstag der Anmeldung:
**21.02.79 Patentblatt 79/04**

(45) Bekanntmachung des Hinweises auf die Patenterteilung:
**10.12.80 Patentblatt 80/25**

(84) Benannte Vertragsstaaten:
**BE CH FR LU NL**

(56) Entgegenhaltungen:
**FR - E - 60 582**

(73) Patentinhaber: **Passavant-Werke Michelbacher Hütte**
**D - 6209 Aarbergen 7 (DE)**

(72) Erfinder: **Zimmermann, Bernd**
**Schulstrasse 18**
**D - 6251 Netzbach (DE)**
**Pries, Gerhard**
**Zum Mühlchen 26**
**D - 6252 Diez (DE)**

Courier Press, Leamington Spa, England.

## Behälter mit einer Vorrichtung zum Abzug von Flüssigkeit

Die Erfindung betrifft einen Behälter mit einer unahängig vom schwankenden Flüssigkeitsspiegel arbeitenden Vorrichtung zum volumenkonstanten Abzug von Flüssigkeit aus dem Behälter.

Es gibt die verschiedensten Anwendungsfälle, in denen aus einem flüssigkeitsgefüllten Behälter über einen längeren Zeitraum eine gleichbleibende Menge abgezogen werden muß. Oft handelt es sich um sogenannte Pufferbehälter, die die in zeitlich stark schwankender Menge ankommende Flüssigkeit zwischenspeichern.

Eine für diesen Zweck geeignete, bekannte Vorrichtung enthält ein Abzugsrohr, das mit seinem unteren Ende um eine Horizontalachse schwenkbar an einem Auslaufrohrstutzen des Behälters befestigt ist. Das obere, die an der Flüssigkeitsoberfläche zu haltende Einlauföffnung aufweisende Ende wird durch einen zusätzlichen Auftriebskörper, insbesondere einen Schwimmer, getragen. Dieser Schwimmer sorgt dafür, daß die Einlauföffnung dem schwankenden Wasserspiegel genau folgt.

Es hat sich jedoch in der Praxis gezeigt, daß ein solcher Auftriebskörper nicht geeignet ist, in allen Stellungen des Abzugsrohres für eine volumenkonstante Entnahme zu sorgen. Die Ursache hierfür ist darin zu suchen, daß das Abzugsrohr selber infolge des über der durchfließenden Flüssigkeit verbleibenden Luftraumes einen erheblichen Auftrieb hat. Dieser Auftrieb schwankt jedoch je nach dem Neigungswinkel des Abzugsrohres, da mit zunehmender Steilheit wegen der höheren Fließgeschwindigkeit der momentane Wasserinhalt des Rohres geringer und dadurch der Luftinhalt größer ist. Diese Einflüsse bewirken, daß mit zunehmender Steilheit immer weniger und schließlich überhaupt keine Flüssigkeit mehr abgezogen wird, weil die Einlaufkante sich dann über dem Flüssigkeitsspiegel befindet.

Aufgabe der Neuerung ist es, die Vorrichtung der beschriebenen Art so zu verbessern, daß die zeitlich entnommene Flüssigkeitsmenge auch bei sehr verschiedenem Flüssigkeitsstand möglichst konstant bleibt. Diese Aufgabe wird gemäß der Neuerung dadurch gelöst, daß Zusatzgewichte und/oder Zusatzkraftmittel vorgesehen sind und daß mit dem Abzugsrohr Hebe- bzw. Kraftübertragungsmittel verbunden sind, die so angeordnet und/oder geführt sind, daß sie beim Hochschwenken des Abzugsrohres in einer dem Auftrieb des Abzugsrohres entgegengerichteten Weise mit den Zusatzgewichten bzw. -kräften in zunehmendem Maße in Wirkverbindung treten. Diese Zusatzgewichte bzw. -kraftmittel bewirken, daß die Unterkante der Einlauföffnung stets um einen gleichbleibenden Betrag unter dem Flüssigkeitsspiegel gehalten wird. Im allgemeinen ist es nicht notwendig, ein stetiges Ansteigen der dem Auftrieb entgegengerichteten Kräfte vorzusehen; es genügt vielmehr, wenn diese Zunahme in mehr oder weniger kleinen Stufen erfolgt. So kann man z.B. am Abzugsrohr ein frei nach unten hängendes Seil oder eine Kette befestigen, welche mehrere kleinere Zusatzgewichte trägt. Und dabei sind die Abstände der Zusatzgewichte untereinander und zum Befestigungspunkt derart gewählt, daß sie bei Nichtgebrauch d.h. bei geringer Steigung des Abzugsrohres, auf dem Behälterboden liegen und von einem bestimmten Steigungswinkel ab nacheinander vom Behälterboden abgehoben werden. Eine stufenlose Zunahme der Gegenkraft kann z.B. durch eine Zugfeder verwirklicht werden, die über ein Seil oder eine Kette mit dem Abzugsrohr verbunden ist.

In den Zeichnungen sind einige solche Möglichkeiten dargestellt. Und zwar zeigen:

Fig. 1 einen kompletten Behälter mit Abzugsrohr und einer Kompensationsvorrichtung mit Zusatzgewichten;

Fig. 2 einen Behälter mit einem Zusatzkraftmittel in Form einer Zugfeder;

Fig. 3 und 4 eine mit der Schwenkachse des Abzugsrohres verbundene Vorrichtung mit Zusatzgewichten.

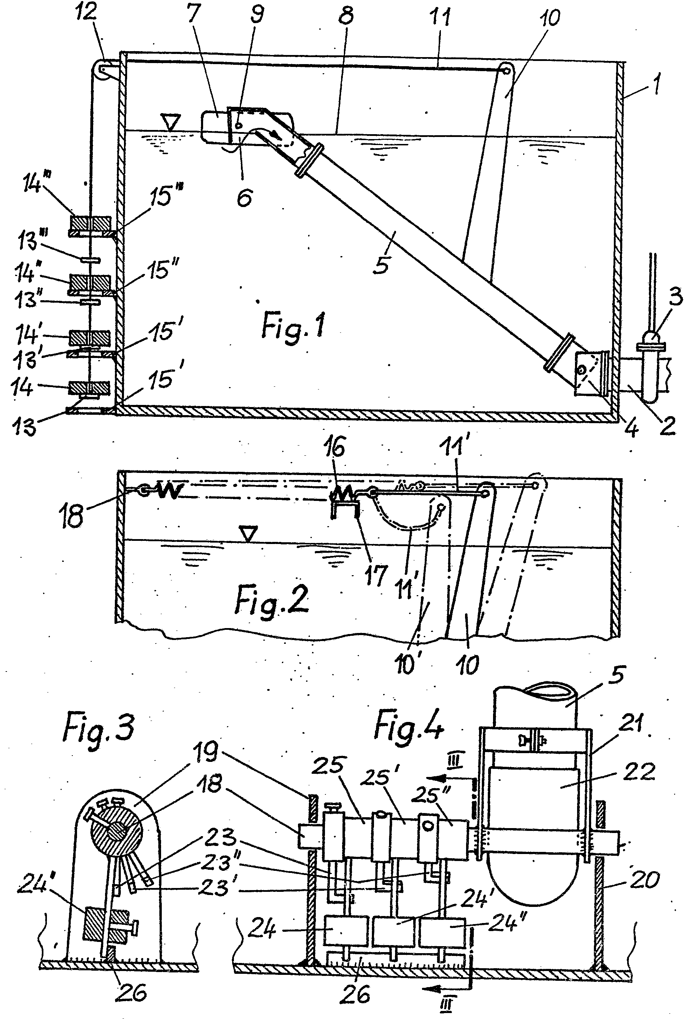

In Fig. 1 ist ein Behälter 1 gezeigt, dem durch ein nicht dargestelltes Zulaufrohr Flüssigkeit zugeführt wird, die durch einen in Bodennähe befindlichen Auslaufrohrstutzen 2 abgezogen werden kann. Zur Unterbrechung des Ablaufs ist ein Schieberventil 3 vorgesehen. Das in das Behälterinnere vorspringende Ende des Auslaufrohrstutzens trägt ein Rohrgelenk 4 für das Abzugrohr 5, dessen oberes, die Einlauföffnung 6 aufweisendes Ende durch Schwimmer 7 an der Flüssigkeitsoberfläche 8 gehalten wird. Der Schwimmer 7 ist mittels eines Gelenkes 9 am Abzugsrohr 5 befestigt, damit er seine Lage relativ zum Flussigkeitsspiegel beibehält.

Vom unteren Teil des Abzugsrohres 5 ragt ein Arm lo bis über die Flüssigkeitsoberfläche nach oben. An diesem Arm beginnt ein Seil oder eine Kette 11, die nach Umlenkung um eine Rolle 12 außerhalb des Behälters 1 nach unten geführt ist und dort übereinander mehrere Mitnehmer 13 trägt. Diese Mitnehmer sind zum Anheben von Zusatzgewichten 14 vorgesehen, die ihrerseits auf Auflagen 15 ruhen. Diese Auflagen enthalten Löcher von solcher Größe, daß die Mitnehmer hindurchbewegt werden können.

Wie aus der Fig. 1 zu ersehen ist, sind die Abstände zwischen den Mitnehmern 13, 13', 13" und 13''' in Bezug auf die zugehörigen Auflagen 15, 15', 15" und 15''' so bemessen, daß die Zusatzgewichte 14 beim Hochziehen des Seiles nacheinander angehoben werden. In dem dargestellten Betriebszustand sind die beiden unteren Gewichte 14 und 14' bereits abgehoben, während die beiden oberen Gewichte 14" und 14''' noch auf den Auflagen 15" bzw. 15''' ruhen. Anhand der Abstände zwischen den beiden oberen Mitnehmern 13" und 13''' kann man ersehen, daß bei weiterem Aufrichten des Abzugsrohres 5 als nächstes das vorletzte Zusatzgewicht 14" und schließlich noch das letzte Gewicht 14''' erfaßt wird. Sinkt der Flüssigkeitsspiegel im Behälter 1, dann bewegt sich das Seil auch wieder nach unten und legt die Zusatzgewichte in umgekehrter Reihenfolge wieder ab.

Eine stetige Zunahme der Gegenkraft wird mit der Ausführungsform nach Fig. 2 erreicht. Dort ist an dem nach oben ragenden Arm lo ein Seilstück 11' befestigt, dessen anderes Ende in das freie Ende einer Zugfeder 16 eingehängt ist. Eine Auflage 17 sorgt dafür, daß die Feder 16, deren anderes Ende in eine an der Beckenwand befestigte Öse 18 eingehängt ist, ihre horizontale Lage beibehält.

In der links strichpunktiert eingezeichneten Stellung lo' des Arms, in der noch keine Zusatzkraft benötigt wird, hängt das Seilstück 11' locker nach unten durch. Erst wenn die Stellung lo erreicht ist, hat es sich gestrafft, so daß bei weiterer Bewegung nach rechts die Feder 16 zunehmend in die Länge gezogen wird und dadurch eine stetig steigende Gegenkraft erzeugt.

In den Figuren 3 und 4 ist eine weitere, mit stufenweisem Anstieg der Gegenkraft arbeitende Vorrichtung gezeigt. Hier ist mit dem Abzugsrohr 5 eine Schwenkwelle 18 starr verbunden, die in zwei Konsolen 19, 20 drehbar gelagert ist. Die Verbindung zwischen dem Abzugsrohr 5 und der Welle 18 wird durch ein Gestänge 21 hergestellt. Die Verbindung vom Abzugsrohr 5 zum Auslaufstutzen 2 wird durch ein Schlauchstück 22 gebildet.

Auf der sich beim Schwenken des Abzugsrohres 5 mitdrehenden Welle 18 können Mitnehmerarme 23, 23', 23" festgeklemmt werden. Jedem Mitnehmer ist ein Gegengewicht 24, 24', 24" zugeordnet, die jeweils über Arme mit auf der Welle 18 frei drehbaren Büchsen 25, 25', 25" verbunden sind. Die unteren Enden der Arme liegen an einer Anschlagleiste 26 an, solange die Gewichte 24 sich in Ruhestellung befinden.

In derjenigen Stellung des Abzugsrohres 5, in der die Ablauföffnung 6 über den Flüssigkeitsspiegel 8 gehoben zu werden droht, ergreift der erste Mitnehmer 23 das ihm zugeordnete Gewicht 24 und hebt es vom Anschlag 26 ab. Da sein Hebelarm in Bezug auf die Welle 18 hierbei stetig wächst, wird hierdurch auch eine Anpassung an den ebenfalls steigenden Auftrieb des Abzugsrohres 5 erreicht. Der nächste stufige Anstieg der Gegenkraft tritt dann ein, wenn der zweite oder der dritte Mitnehmer das zugehörige Gegengewicht erfaßt.

Natürlich können statt der dargestellten drei Gegengewichte auch mehrere dann vielleicht kleinere verwendet werden, so daß die Annäherung an einen stetigen Kraftanstieg noch besser ist. Auch können die Gegengewichte und ihre Mitnehmer außerhalb des Beckens angeordnet werden, wozu dann die Schwenkwelle des Abzugsrohres entsprechend verlängert werden muß. Eine solche Anordnung würde eventuelle Einstellarbeiten wesentlich erleichtern.

Eine weitere recht einfache Ausführungsform bestünde darin, in der Nähe des oberen Endes des Abzugsrohres 5 ein Seil oder eine Kette zu befestigen und frei nach unten in den Behälter hängen zu lassen. An diesem Zugmittel könnten dann in Abständen mehrere Gewichte befestigt werden, die bei Nichtgebrauch, d.h. bei flacher Stellung des Abzugsrohres 5 vollzählig auf dem Beckenboden liegen und erst bei Hochschweken des Abzugsrohres über einen bestimmten Winkel hinaus nacheinander angehoben würden.

In allen beschriebenen und dargestellten Ausführungsbeispielen sind vielfältige Einstellmöglichkeiten vorgesehen, damit die Abzugsvorrichtung vor der ersten Inbetriebnahme optimal einjustiert und später im Betrieb an Flüssigkeiten mit wechselnder Dichte angepaßt werden kann.

**Patentansprüche**

1. Behälter mit einer unabhängig vom schwankenden Flüssigkeitsspiegel arbeitenden Vorrichtung zum annähernd volumenkonstanten Abzug von Flüssigkeit aus dem Behälter, enthaltend ein Abzugsrohr, das mit seinem unteren Ende um eine Horizontalachse schwenkbar an einem Auslaufrohrstutzen befestigt ist und dessen oberes, die an der Flüssigkeitsoberfläche zu haltende Einlauföffnung aufweisendes Ende ggf. einen den Auftrieb mindestens teilweise luftgefüllten Abzugsrohres unterstützenden zusätzlichen Auftriebskörper, insbesondere einen Schwimmer aufweist, *dadurch gekennzeichnet,* daß Zusatzgewichte (14, 24) und/oder Zusatzkraftmittel (16) vorgesehen sind und daß mit dem Abzugsrohr (5) Hebe- bzw. Kraftübertragungsmittel (11, 23) verbunden sind, die so angeordnet und/oder geführt sind, daß sie beim Hochschwenken des Abzugsrohres (5) in einer dem Auftrieb des Abzugsrohres (5) entgegengerichteten Weise in zunehmendem Maße mit den Zusatzgewichten (14, 24) bzw.—kraftmitteln (16) in Wirkverbindung treten.

2. Behälter nach Anspruch 1, *dadurch gekennzeichnet,* daß das Hebe- bzw. Kraftübertragungsmittel (11, 11') ein Seile eine Kette oder dgl. ist.

3. Behälter nach Anspruch 2, *dadurch gekennzeichnet,* daß das Seil oder die Kette frei nach unten hängend am Abzugsrohr befestigt ist und daß an dem Seil bzw. der Kette die Zusatzgewichte in derartigen gegenseitigen Abständen und in solchem Abstand vom Befestigungspunkt angebracht sind, daß sie bei Nichtgebrauch, d.h. bei geringer Steigung des Abzugsrohres, auf dem Behälterboden liegen und von einem bestimmten Steigungswinkel des Abzugsrohres ab nacheinander vom Behälterboden abgehoben werden.

4. Behälter nach Anspruch 2, *dadurch gekennzeichnet,* daß für die Zusatzgewichte (14) in verschiedener Höbe übereinander angeordnete Auflagen (15) vorgesehen sind und daß das Seil bzw. die Kette mit Mitnehmern (13) versehen ist, deren gegenseitige Abstände geringer sind also die jeweiligen gegenseitigen Abstände der Auflagen (15).

5. Behälter nach Anspruch 1, *dadurch gekennseichnet,* daß mit dem Abzugsrohr (5) Mitnehmer (23) starr verbunden und derart gestaffelt angeordnet sind, daß sie beim Hochschwenken des Abzugsrohres (5) nacheinander auf Auflagen oder an Anschlägen (26) ruhende Zusatzgewichte (24) erfassen und anheben.

6. Behälter nach Anspruch 1, *dadurch gekennzeichnet,* daß das Zusatzkraftmittel eine Feder (16) ist.

## Claims

1. Tank with device for volume constant drainage of liquid out of the tank, functioning independent from a variable liquid level, containing a drainage pipe which is attached to a drainage pipe socket with its lower end pivoting around a horizontal axis. The upper end of the drainage pipe has an inlet opening which has to be kept at the liquid surface, if necessary with aid of an additional mean, i.e. a float which supports the buoyant force of the drainage pipe being partly filled with air, *characterized inasmuch* that additional weights (14, 24) and/or additional forces (16) are forseen and that lifting resp. force transmissions (11, 23) are connected with the drainage pipe (5). The lifting- resp. force transmissions (11, 23) are arranged and/or guided in such a way that they are functioning more and more together with the additional weights (14, 24) resp. the additional forces (16) i.e. contrary to the buoyant force of the drainage pipe in that moment when drainage pipe lifts upwards.

2. Tank according to claim 1, *characterized inasmuch* that the means for lifting- resp. force transmissions (11, 11') is a rope, a chain or similar.

3. Tank according to claim 2, *characterized inasmuch* that the rope or chain which is hanging free to the bottom is fixed to the drainage pipe and that the additional weights are fixed to the rope or chain in their respective distance and in such a distance from the fastening point that they are resting at the tank bottom in case of disuse, i.e. in case of small rise of the drainage pipe. The additional weights should be lifted successively from the tank-bottom when drainage pipe reaches a certain angle of inclination.

4. Tank according to claim 2, *characterized*

*inasmuch* that the supportings (15) superposed in different height are provided for the additional weights (14) and that the rope resp. the chain is equipped with cams (13) the reciprocal distances of which are smaller than the respective reciprocal distances of the supports (15).

5. Tank according to claim 1, *characterized inasmuch* that the cams (23) are rigidly connected with the drainage pipe (5) and staggered in such a way that they are able to successively grip and lift the additional weights (24) which are resting on supports or brackets (26) when lifting the drainage pipe (5).

6. Tank according to claim 1, *characterized inasmuch* that the additional force consists of a spring (16).

## Revendications

1. Récipient avec dispositif de soutirage d'un volume constant d'un liquide de ce récipient, fonctionnant indépendamment du niveau variable du liquide; contenant un tuyau d'écoulement fixé à sa partie inférieure sur la tubulure de décharge de sorte qu'il peut pivoter autour d'un axe horizontal, dont la partie supérieure présente l'ouverture d'entrée qui doit être maintenue au niveau du liquide, le cas échéant, à l'aide d'un moyen supplémentaire, p.ex. un flotteur supportant la force ascensionnelle du tuyau d'écoulement rempli d'air, au moins partiellement, caractérisé en ce que l'on a prévu des poids supplémentaires 14,24 et/ou des forces supplémentaires 16 et qu'on a relié le tuyau d'écoulement 5 à des moyens de levage ou de transmission de force 11, 23, disposés et/ou guidés de sorte qu'ils fonctionnent de plus en plus conjointement avec les poids 14,24 ou bien forces 16 supplémentaires dans le sens contaire de la force ascensionnelle du tuyau d'écoulement 5 au moment où il se redresse.

2. Récipient suivant la revendication 1, caractérisé en ce que le moyen de levage ou bein de transmission de force 11, 11' est un câble, une chaîne ou chose semblable.

3. Récipient suivant la revendication 2, caractérisé en ce que le câble ou la chaîne est fixé au tuyau d'écoulement de sorte qu'il pend librement vers le bas et qu'on a fixé au câble ou à la chaîne des poids supplémentaires à des distances respectives et à une distance au point de fixation qui permettent de soulever les poids supplémentaires—resposant sur le fond du récipient en cas de non-usage—l'un après l'autre si l'angle d'inclinaison du tuyau d'écoulement dépasse une certaine valeur.

4. Récipient suivant la revendication 2, caractérisé en ce que l'on a prévu des appuis 15 disposés l'un au-dessus de l'autre à des hauteurs différentes destinés aux poids supplémentaires et que le câble ou bein la chaîne est muni des entraîneurs 13 dont les distances respectives sont plus petites que les distances respectives des appuis correspondants.

5. Récipient suivant la revendication 1, caractérisé en ce que les entraîneurs 23 sont reliés au tuyau d'écoulement 5 de façon rigide et qu'ils sont disposés par échelons de sorte qu'ils saisissent et soulèvent les poids supplémentaires l'un après l'autre, reposant sur des appuis ou des butées 26 au moment où le tuyau d'écoulement se redresse.

6. Récipient suivant la revendication 1, caractérisé en ce que la force supplémentaire est un ressort 16.

0 000 692

Fig. 1

Fig. 2

Fig. 3

Fig. 4